# EUROPEAN PATENT SPECIFICATION

(11) **EP 2 275 756 B1**
(45) Date of publication and mention of the grant of the patent: **19.06.2019**
(21) Application number: 09724252.3
(22) Date of filing: 23.03.2009
(51) Int. Cl.: F25B 27/00, F25B 1/00, F25B 27/02, F25B 13/00

(54) **ELECTRONIC CONTROL UNIT FOR AN ENGINE-DRIVEN HEAT PUMP**
ELEKTRONISCHE STEUEREINHEIT FÜR EINE MOTORBETRIEBENE WÄRMEPUMPE
UNITÉ DE COMMANDE ÉLECTRONIQUE POUR UNE POMPE A CHALEUR ENTRAINEE PAR MOTEUR

(30) Priority: 24.03.2008 JP 2008075775
(43) Date of publication of application: 19.01.2011
(73) Proprietor: Yanmar Co., Ltd., Osaka-shi, Osaka 530-0013 (JP)
(72) Inventor: NARIYASU, Hiroki, Osaka-shi, Osaka 530-8311 (JP); SUGIMORI, Keiji, Osaka-shi, Osaka 530-8311 (JP)
(74) Representative: Jostarndt Patentanwalts-AG
(86) International application number: PCT/JP2009/055617
(87) International publication number: WO 2009/119483

(56) References cited:
- EP-A1- 1 162 414
- JP-A- 10 170 095
- JP-A- 2003 035 467
- JP-A- 2004 116 930
- JP-A- 2004 116 931
- JP-A- 2005 331 177
- JP-A- 2006 250 438
- JP-A- 2008 039 299

## Description

### Technical Field

The present invention relates to an electronic control unit to control a superheat degree at the time of heating operation of an engine-driven heat pump including an outdoor heat exchanger and a waste heat collection circuit connected in parallel with a suction route.

### Background Art

There is well known an engine-driven heat pump including a compressor driven by an engine and a waste heat collector collecting engine waste heat to a coolant at the time of heating operation. In an engine-driven heat pump disclosed in the Japanese Patent Laid Open Gazette 2006-250438, a coolant circuit is constructed so that a waste heat collector is connected in parallel with an outdoor heat exchanger, which serves as an evaporator when communicated with a suction circuit, and the suction circuit. The superheat degree from confluence of the suction circuit and a waste heat collection circuit to a compressor suction side is controlled with an outdoor heat exchange expansion valve.

In the engine-driven heat pump disclosed in the Japanese Patent Laid Open Gazette 2006-250438, the outdoor heat exchange expansion valve is controlled on the assumption that the outdoor heat exchanger is used as a main evaporator. However, according to outside air temperature or heating load, it may be difficult to keep the balance of heat exchange amount between outdoor and indoor with the outdoor heat exchanger as the main evaporator.

Furthermore, EP 1 162 414 B1 discloses an electronic control unit according to the preamble of claim 1.

### Disclosure of Invention

### Problems to Be Solved by the Invention

The purpose of the present invention is to provide an electronic control unit for an engine-driven heat pump that an optimal main evaporator can be selected according to outside air temperature or heating load.

### Means for Solving the Problems

An electronic control unit for an engine-driven heat pump according to the present invention wherein an outdoor exchanger is suitable to perform a heat exchange with an outside air, a waste heat collector is connected in parallel with an outdoor heat exchanger in the case that the outdoor heat exchanger functions as an evaporator and is suitable to perform a heat exchange with engine waste heat, a supercooler is connected in parallel with the outdoor heat exchanger and the waste heat collector in the case suitable to perform a heat exchange with a liquid coolant; a first expansion valve is provided at an inlet of the outdoor heat exchanger in the case so as to employ a superheat degree of an outlet of the outdoor heat exchanger as a control target; a second expansion valve is provided at an inlet of the waste heat collector in the case so as to employ a superheat degree of an outlet of the waste heat collector as a control target; and a third expansion valve is provided at an inlet of the supercooler in the case so as to employ a superheat degree of an outlet of the supercooler as a control target; wherein a superheat degree in a compressor suction route at the downstream of a confluence of the outdoor heat exchanger outlet route, the waste heat collector outlet route and the supercooler outlet route in the case is employed as a suction superheat degree is characterized in that the suction superheat degree is suitable to be selected as the control target instead of the superheat degree at the outlet of each of the outdoor heat exchanger, the waste heat collector and the supercooler, and the electronic unit is configured to select the suction superheat degree as the control target of the first expansion valve and to employ the superheat degree at the outlet of each of the waste heat collector and the supercooler as the control target of the corresponding valves such that the optimal main evaporator is selected according to outside air temperature or heating load.

The electronic unit according to the present invention wherein, preferably, in the case that outside air temperature is lower than predetermined temperature, the electronic unit is configured to select the suction superheat degree as the control target of the second expansion valve and to employ the superheat degree at the outlet of each of the other two of the three expansion valves as the control target of the corresponding valves.

The electronic unit according to the present invention wherein, preferably, in the case that heating load is lower than predetermined load, the electronic unit is configured to select the suction superheat degree as the control target of the third expansion valve and to employ the superheat degree at the outlet of each of the other two of the three expansion valves as the control target of the corresponding valves.

### Effect of the Invention

According to the electronic control unit for the engine-driven heat pump of the present invention, the optimal main evaporator is selected according to outside air temperature or heating load.

### Brief Description of Drawings

[Fig. 1] It is a coolant circuitry drawing of entire construction of an engine-driven heat pump according to the present disclosure.
[Fig. 2] It is a block diagram of an ECU of the present invention.
[Fig. 3] It is a table of superheat degrees of control target of each of expansion valves at the time of heating operation of the present invention.

### The Best Mode for Carrying out the Invention

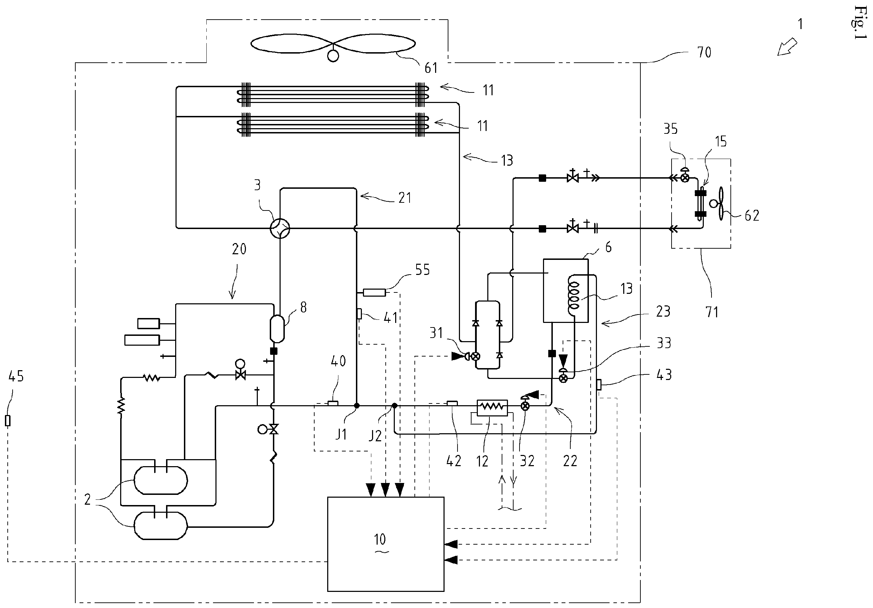

Explanation will be given on construction of an engine-driven heat pump 1 according to the present disclosure referring Fig. 1.

The engine-driven heat pump 1 includes one outdoor unit 70 and a plurality of indoor units 71. In below embodiment, for simplifying the explanation, the outdoor unit 70 is supposed to be connected to one indoor unit 71.

The engine-driven heat pump 1 is constructed so that a compressor 2 which is driven by an engine (not shown) so as to compress coolant, a four-way valve 3 which switches connection of discharge side and suction side of the compressor 2 at the time of cooling operation and heating operation, an outdoor heat exchanger 11, an indoor heat exchanger 15, a first expansion valve 31 provided in a route connecting liquid piping sides of the outdoor heat exchanger 11 and the indoor heat exchanger 15 to each other, and a receiver 6 in which liquid coolant condensed by the outdoor heat exchanger 11 or the indoor heat exchanger 15 is pooled are connected.

At the time of cooling operation, the four-way valve 3 connects the discharge side of the compressor 2 to the outdoor heat exchanger 11 and connects the suction side of the compressor 2 to the indoor heat exchanger 15 so that the outdoor heat exchanger 11 and the indoor heat exchanger 15 function respectively as a condenser and an evaporator. At the time of heating operation, the four-way valve 3 connects the discharge side of the compressor 2 to the indoor heat exchanger 15 and connects the suction side of the compressor 2 to the outdoor heat exchanger 11 so that the indoor heat exchanger 15 and the outdoor heat exchanger 11 function respectively as the condenser and the evaporator. The first expansion valve 31 is a flow regulating valve which controls the superheat degree of coolant sucked to the outlet of the outdoor heat exchanger 11 in the case that the outdoor heat exchanger 11 functions as the evaporator, that is, the compressor 2.

A discharge route 20 connects the discharge side of the compressor 2 to the four-way valve 3. The discharge route 20 is provided therein with an oil separator 8 which separates refrigerating machine oil included in gas coolant and returns it to the suction side of the compressor 2.

A suction route 21 connects the suction side of the compressor 2 to the four-way valve 3. A low pressure sensor 55 and an outdoor heat exchange outlet temperature sensor 41 are provided in the suction route 21. A waste heat collection route 22 discussed later joins a confluence J1 of the suction route 21. A suction temperature sensor 40 is provided in a route from the confluence J1 to the suction side of the compressor 2.

The waste heat collection route 22 is branched at the outlet of the receiver 6 from the route connected to the liquid piping side of the outdoor heat exchanger 11 and connected to the suction route 21 in parallel with the route passing through the outdoor heat exchanger 11. In the waste heat collection route 22, a second expansion valve 32 and a waste heat collector 12 are provided in this order along the route from the branch point from the route passing through the outdoor heat exchanger 11 to the confluence J1 of the suction route 21. An alternate long and two short dashes line passing through the waste heat collector 12 indicates a flow of engine cooling water. A supercooling route 23 discussed later joins a confluence J2 of the waste heat collection route 22. A waste heat collection outlet temperature sensor 42 is provided between the outlet of the waste heat collector 12 and the confluence J2.

The supercooling route 23 is branched at the outlet of the receiver 6 from the route passing through the outdoor heat exchanger 11 and the waste heat collection route 22, and is connected to the suction route 21 in parallel with these routes. In the supercooling route 23, a third expansion valve 33 and a supercooler 13 are provided in this order along the route from the branch point from the route passing through the outdoor heat exchanger 11 etc. to the confluence J2 of the waste heat collection route 22. A supercooling outlet temperature sensor 43 is provided between the outlet of the supercooler 13 and the confluence J2.

Explanation will be given on coolant action in the coolant circuit construction at the time of heating operation.

At the time of heating operation, the four-way valve 3 connects the suction route 21 to the outdoor heat exchanger 11 (see Fig. 1).

The gas coolant with high temperature and high pressure which is compressed and discharged by the compressor 2 is sent through the four-way valve 3 to the indoor heat exchanger 15, and the heat of the gas coolant is radiated to air in the indoor heat exchanger 15 dent by an indoor fan 62 so as to be condensed, whereby the heat of condensation is radiated to the air so as to warm it. At this time, the gas coolant turns into liquid coolant. Then, the liquid coolant flows into the receiver 6 and reaches the first expansion valve 31 which functions as an outdoor heat exchange expansion valve, and is decompressed suddenly by the first expansion valve 31 so as to turn into gas-liquid mixture coolant which is easy to evaporate and then guided to the outdoor heat exchanger 11. The outdoor heat exchanger 11 serves as an evaporator and the gas-liquid mixture coolant absorbs the heat of evaporation from the outside air so as to turn into gas coolant. Then, the gas coolant which evaporates via the outdoor heat exchanger 11 passes along the suction route 21 through the four-way valve 3 and is sucked and compressed by the compressor 2, and then is discharged again.

Herein, explanation will be given on the coolant action of the waste heat collection route 22 and the supercooling route 23 at the time of heating operation.

In the waste heat collection route 22, the liquid coolant branched from the receiver 6 is decompressed suddenly by the second expansion valve 32, which functions as a waste heat collection expansion valve, so as to turn into gas-liquid mixture coolant which is easy to evaporate, and then guided to the waste heat collector 12. At this time, the waste heat collector 12 also serves as an evaporator and the gas-liquid mixture coolant absorbs the heat of evaporation from the engine waste heat so as to turn into gas coolant. The gas coolant flows into the suction route 21 at the confluence J1 and is sucked and compressed by the compressor 2, and then is discharged again.

On the other hand, in the supercooling route 23, the liquid coolant branched from the receiver 6 is decompressed suddenly by the third expansion valve 33, which functions as a supercooling expansion valve, so as to turn into gas-liquid mixture coolant which is easy to evaporate, and then guided to the supercooler 13 provided in the receiver 6. The supercooler 13 also serves as an evaporator and the gas-liquid mixture coolant absorbs the heat of evaporation from the liquid coolant in the receiver 6 so as to turn into gas coolant. The gas coolant flows into the waste heat collection route 22 at the confluence J2 and flows into the suction route 21 at the confluence J1 and is sucked and compressed by the compressor 2, and then is discharged again.

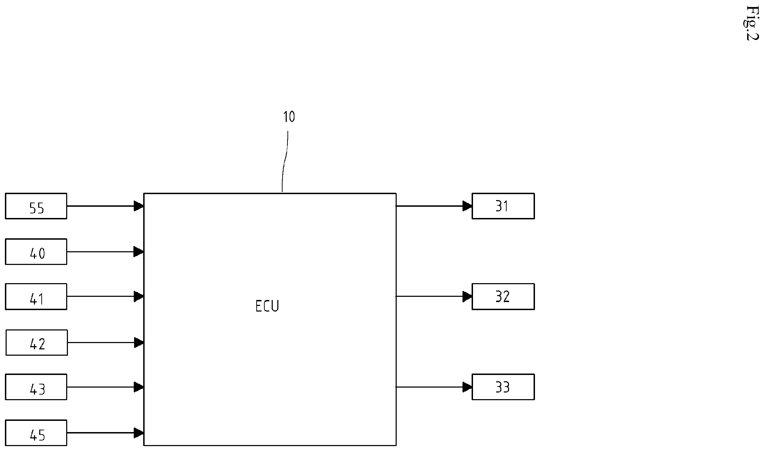

Explanation will be given on an electronic control unit (hereinafter, referred to as ECU) 10 referring Fig. 2.

The ECU 10 is constructed by connecting the low pressure sensor 55, the suction temperature sensor 40, the outdoor heat exchange outlet temperature sensor 41, the waste heat collection outlet temperature sensor 42, the supercooling outlet temperature sensor 43, and an outside air temperature sensor 45 to the first expansion valve 31, the second expansion valve 32 and the third expansion valve 33.

Explanation will be given on control construction of each of superheat degrees referring Figs. 1 and 2.

An outdoor heat exchange superheat degree SH1 (hereinafter, referred to as superheat degree SH1), which is the superheat degree at the outlet of the outdoor heat exchanger 11 at the time of heating operation, is found with the temperature difference between outdoor heat exchange outlet temperature T1 detected by the outdoor heat exchange outlet temperature sensor 41 and saturation equivalent temperature Te (hereinafter, referred to as evaporation temperature Te) of low pressure LP detected by the low pressure sensor 55. The opening degree of the first expansion valve 31 is controlled for the aim that the temperature difference converges to a predetermined range.

A waste heat collection superheat degree SH2 (hereinafter, referred to as superheat degree SH2), which is the superheat degree at the outlet of the waste heat collector 12 at the time of heating operation, is found with the temperature difference between waste heat collection outlet temperature T2 detected by the waste heat collection outlet temperature sensor 42 and the evaporation temperature Te. The opening degree of the second expansion valve 32 is controlled for the aim that the temperature difference converges to a predetermined range.

A supercooling superheat degree SH3 (hereinafter, referred to as superheat degree SH3), which is the superheat degree at the outlet of the supercooler 13, is found with the temperature difference between supercooling outlet temperature T3 detected by the supercooling outlet temperature sensor 43 and the evaporation temperature Te. The opening degree of the third expansion valve 33 is controlled for the aim that the temperature difference converges to a predetermined range.

A suction superheat degree SHO (hereinafter, referred to as superheat degree SH0), which is the superheat degree from the confluence J1 to the suction side of the compressor 2, is found with the temperature difference between suction pipe temperature T0 detected by the suction temperature sensor 40 and the evaporation temperature Te.

The suction superheat degree SHO is the final superheat degree of the coolant sucked to the compressor 2. For preventing liquid compression of the compressor 2, the opening degree of each of the first expansion valve 31, the second expansion valve 32 and the third expansion valve 33 must be regulated so as to make the superheat degree SHO positive. In this embodiment, as discussed later, the control targets of the three kinds of expansion valves are substituted with the above-mentioned targets corresponding to evaporation ability or condensation ability so that the suction superheat degree SHO is converged within the predetermined range as the control target.

In this embodiment, the opening degree of each of the first expansion valve 31, the second expansion valve 32 and the third expansion valve 33 is controlled so that the suction superheat degree SH0 is converged to 5 to 8 deg.

Outside air temperature Ta is detected with the outside air temperature sensor 45 provided in the vicinity of the outdoor heat exchanger 11.

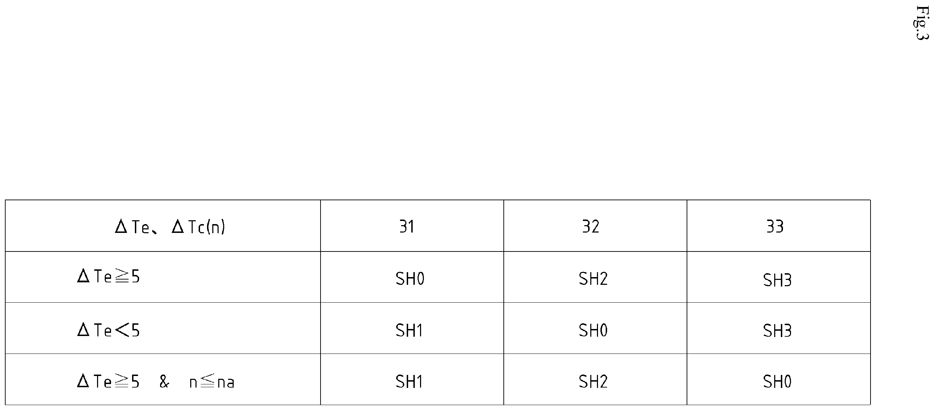

Explanation will be given on the control of each of the superheat degrees at the time of heating operation referring Fig. 3. Fig. 3 shows each of the superheat degrees of the control targets of the expansion valves 31 to 33 corresponding to evaporation ability Δ Te and heating ability Δ Tc.

In this embodiment, corresponding to the outside air temperature Ta or heating demand determined by operating unit number n, operating time and arrangement position of the indoor units 71, that is, the heating ability Δ Tc, one heat exchanger of the outdoor heat exchanger 11, the waste heat collector 12 and the outlet of the supercooler 13 is selected as a main evaporator.

In this case, the main evaporator is a heat exchanger that an expansion valve whose control target is the superheat degree SH0 is provided at the inlet side.

In this embodiment, the expansion valve controlling the superheat degree is selected properly while the evaporation ability Δ Te is regarded as the difference between the outside air temperature Ta and the evaporation temperature Te.

When the evaporation ability Δ Te is not less than 5°C, the control target of the first expansion valve 31 is switched from the superheat degree SH1 to the superheat degree SHO. On the other hand, the control target of the second expansion valve 32 is still the superheat degree SH2 and the control target of and the third expansion valve 33 is still the superheat degree SH3. In this case, the regulation of the opening degree of the first expansion valve 31 is mainly performed and the outdoor heat exchanger 11 functions as the main evaporator.

Accordingly, for example in the state that wide heating ability is required, the outdoor heat exchanger 11 can be used as the main evaporator so as to deal with various heating demand.

When the evaporation ability Δ Te is less than 5°C, the control target of the second expansion valve 32 is switched from the superheat degree SH2 to the superheat degree SHO. On the other hand, the control target of the first expansion valve 31 is still the superheat degree SH1 and the control target of the third expansion valve 33 is still the superheat degree SH3. In this case, since the heat exchange with the outside air is difficult, the regulation of the opening degree of the second expansion valve 32 is mainly performed.

Accordingly, in the state that the outside air temperature Ta is low and so the evaporation ability Δ Te is low so that it is difficult to use the outdoor heat exchanger 11 as the evaporator, the waste heat collector 12 which performs the heat exchange with the engine waste heat can be used as the main evaporator, whereby the heating operation can be continued for long time. For preventing the expansion valve, which is regulated its opening degree to the superheat degree SH1 as the control target, from switching between the first expansion valve 31 and the second expansion valve 32, hysteresis α may be set with the threshold 5°C. Namely, the threshold is set to be 5-α°C when the expansion valve whose control target is the superheat degree SHO is switched from the first expansion valve 31 to the second expansion valve 32, and is set to be 5+α°C when the expansion valve is switched from the second expansion valve 32 to the first expansion valve 31.

In the case that the evaporation ability Δ Te is very larger than the heating ability Δ Tc, for example in the case that the operating unit number n of the indoor units 71 is not more than the predetermined number, the control target of the third expansion valve 33 is switched from the superheat degree SH3 to the superheat degree SH0. On the other hand, the control target of the first expansion valve 31 is still the superheat degree SH1 and the control target of the second expansion valve is still the superheat degree SH2. In this case, when only the heat exchange with the outside air is performed, the superheat degree SH0 becomes too large. Then, The opening degree of the third expansion valve 33 is regulated so that the coolant of the superheat degree SH2 lower than the superheat degree SH0 joins via the confluences J2 and J1, whereby the superheat degree SH0 is within the predetermined range.

Accordingly, in the case that the evaporation ability is excessive only with the heat exchange with the outside air, the temperature of the suction superheat degree can be reduced with the supercooler 13, whereby the heating operation can be continued for long time.

Especially at the middle period such as spring and autumn, the state is supposable that the outside air temperature Ta is high and the operating unit number n of a plurality of the connected indoor units 71 is small so that the heating ability Δ Tc is very smaller than the evaporation ability Δ Te. In this state, the control target of the third expansion valve 33 is set to be the superheat degree SH0 and the temperature of the suction superheat degree is reduced with the coolant passing through the supercooler 13.

Accordingly, in the state that the evaporation ability Δ Te is very larger than the heating ability Δ Tc, the excessive evaporation ability of the outdoor heat exchanger 11 can be suppressed with the supercooler 13, whereby the heating operation can be performed.

### Industrial Applicability

The present invention is adoptable to an engine-driven heat pump.

## Claims

1. An electronic control unit (10) for an engine-driven heat pump (1), the engine-driven heat pump (1) comprising:
an outdoor exchanger suitable to perform a heat exchange with an outside air,
a waste heat collector (12) connected in parallel with the-outdoor heat exchanger (11) in the case that the outdoor heat exchanger (11) functions as an evaporator and-is suitable to perform a heat exchange with engine waste heat,
a supercooler (13) is connected in parallel with the outdoor heat exchanger (11) and the waste heat collector (12) in the case suitable to perform a heat exchange with a liquid coolant,
a first expansion valve (31) is provided at an inlet of the outdoor heat exchanger (11) in the case so as to employ a superheat degree of an outlet of the outdoor heat exchanger (11) as a control target,
a second expansion valve (32) is provided at an inlet of the waste heat collector (12) in the case so as to employ a superheat degree of an outlet of the waste heat collector (12) as a control target, and
a third expansion valve (33) is provided at an inlet of the supercooler (13) in the case so as to employ a superheat degree of an outlet of the supercooler (13) as a control target, wherein
a superheat degree in a compressor (2) suction route at the downstream of a confluence of the outdoor heat exchanger (11) outlet route, the waste heat collector (12) outlet route and the supercooler (13) outlet route in the case is employed as a suction superheat degree,
**characterized in that**:
the suction superheat degree is suitable to be selected as the control target instead of the superheat degree at the outlet of each of the outdoor heat exchanger (11), the waste heat collector (12) and the supercooler (13), and the electronic control unit (10) is configured to select the suction superheat degree as the control target of the first expansion valve (31) and to employ the superheat degree at the outlet of each of the waste heat collector (12) and the supercooler (13) as the control target of the corresponding valves (32, 33) such that the optimal main evaporator is selected according to outside air temperature or heating load.

2. The electronic control unit (10) according to claim 1, wherein, in the case that outside air temperature is lower than predetermined temperature, the electronic control unit (10) is configured to select the suction superheat degree as the control target of the second expansion valve (32) and to employ the superheat degree at the outlet of each of the other two of the three expansion valves (31, 33) as the control target of the corresponding valves (31, 33).

3. The electronic control unit (10) according to claim 1, wherein in the case that heating load is lower than predetermined load, the electronic control unit (10) is configured to select the suction superheat degree as the control target of the third expansion valve (33) and to employ the superheat degree at the outlet of each of the other two of the three expansion valves (31, 32) as the control target of the corresponding valves (31, 32).

## Patentansprüche

1. Elektronische Steuereinheit (10) für eine motorbetriebene Wärmepumpe (1), die motorbetriebene Wärmepumpe (1) umfassend:
einen Außentauscher, der geeignet ist, einen Wärmeaustausch mit einer Außenluft durchzuführen,
einen Abwärmekollektor (12), der parallel mit dem Außenwärmetauscher (11) verbunden ist in dem Fall, dass der Außenwärmetauscher (11) als ein Verdampfer arbeitet und geeignet ist, einen Wärmeaustausch mit Motorabwärme durchzuführen,
einen Unterkühler (13), der parallel mit dem Außenwärmetauscher (11) und dem Abwärmekollektor (12) verbunden ist, in dem Fall geeignet, einen Wärmeaustausch mit einem flüssigen Kühlmittel durchzuführen,
ein erstes Expansionsventil (31), das an einem Eingang des Außenwärmetauschers (11) vorgesehen ist, um in dem Fall einen Überhitzungsgrad eines Ausgangs des Außenwärmetauschers (11) als ein Steuerungsziel zu verwenden,
ein zweites Expansionsventil (32), das an einem Eingang des Abwärmekollektors (12) vorgesehen ist, um in dem Fall einen Überhitzungsgrad eines Ausgangs des Abwärmekollektors (12) als ein Steuerungsziel zu verwenden, und
ein drittes Expansionsventil (33), das an einem Eingang des Unterkühlers (13) vorgesehen ist, um in dem Fall einen Überhitzungsgrad eines Ausgangs des Unterkühlers (13) als ein Steuerungsziel zu verwenden, wobei
ein Überhitzungsgrad in einer Kompressor (2) Saugstrecke stromabwärts eines Zusammenflusses der Ausgangsstrecke des Außenwärmetauschers (11), der Ausgangsstrecke des Abwärmekollektors (12) und der Ausgangsstrecke des Unterkühlers (13), der in dem Fall verwendet wird als ein Saugüberhitzungsgrad,
**dadurch gekennzeichnet, dass**:
der Saugüberhitzungsgrad geeignet ist, statt des Überhitzungsgrades am Ausgang von jeweils dem Außenwärmetauscher (11), dem Abwärmekollektor (12) und dem Unterkühler (13) als das Steuerungsziel ausgewählt zu werden, und die elektronische Steuereinheit (10) so konfiguriert ist, dass sie den Saugüberhitzungsgrad als das Steuerungsziel des ersten Expansionsventils (31) auswählt und den Überhitzungsgrad am Ausgang von jeweils dem Abwärmekollektor (12) und dem Unterkühler (13) als das Steuerungsziel der entsprechenden Ventile (32, 33) verwendet, sodass der optimale Hauptverdampfer anhand der Außenlufttemperatur oder der Heizlast ausgewählt wird.

2. Elektronische Steuereinheit (10) nach Anspruch 1, wobei, in dem Fall, dass die Außenlufttemperatur niedriger ist als eine vorbestimmte Temperatur, die elektronische Steuereinheit (10) so konfiguriert ist, dass sie den Saugüberhitzungsgrad als das Steuerungsziel des zweiten Expansionsventils (32) auswählt und den Überhitzungsgrad am Ausgang der anderen beiden der drei Expansionsventile (31, 33) als das Steuerungsziel der entsprechenden Ventile (31, 33) verwendet.

3. Elektronische Steuereinheit (10) nach Anspruch 1, wobei, in dem Fall, dass die Heizlast niedriger ist als eine vorbestimmte Last, die elektronische Steuereinheit (10) so konfiguriert ist, dass sie den Saugüberhitzungsgrad als das Steuerungsziel des dritten Expansionsventils (33) auswählt und den Überhitzungsgrad am Ausgang der anderen beiden der drei Expansionsventile (31, 32) als das Steuerungsziel der entsprechenden Ventile (31, 32) verwendet.

## Revendications

1. Module de commande électronique (10) pour une pompe à chaleur entraînée par un moteur (1), la pompe à chaleur entraînée par un moteur (1) comprenant :
un échangeur extérieur convenant à réaliser un échange de chaleur avec un air extérieur,
un collecteur de chaleur perdue (12) connecté en parallèle à l'échangeur de chaleur extérieur (11) au cas où l'échangeur de chaleur extérieur (11) fonctionne comme évaporateur et convient à réaliser un échange de chaleur avec la chaleur perdue du moteur,
un super-refroidisseur (13) est connecté en parallèle à l'échangeur de chaleur extérieur (11) et au collecteur de chaleur perdue (12) dans le cas convenant à réaliser un échange de chaleur avec un réfrigérant liquide,
un premier détendeur (31) est prévu à une entrée de l'échangeur de chaleur extérieur (11) dans le cas de l'emploi d'un degré de surchauffe d'une sortie de l'échangeur de chaleur extérieur (11) comme cible de commande,
un deuxième détendeur (32) est prévu à une entrée du collecteur de chaleur perdue (12) dans le cas de l'emploi d'un degré de surchauffe d'une sortie du collecteur de chaleur perdue (12) comme cible de commande, et
un troisième détendeur (33) est prévu à une entrée du super-refroidisseur (13) dans le cas de l'emploi d'un degré de surchauffe d'une sortie du super-refroidisseur (13) comme cible de commande, dans lequel
un degré de surchauffe dans un trajet d'aspiration de compresseur (2) en aval d'une confluence du trajet de sortie de l'échangeur de chaleur extérieur (11), du trajet de sortie du collecteur de chaleur perdue (12) et du trajet de sortie du super-refroidisseur (13) dans le cas est employé comme degré de surchauffe d'aspiration,
**caractérisé en ce que** :
le degré de surchauffe d'aspiration convient à être sélectionné comme la cible de commande au lieu du degré de surchauffe à la sortie de chacun de l'échangeur de chaleur extérieur (11), du collecteur de chaleur perdue (12) et du super-refroidisseur (13), et le module de commande électronique (10) est configuré pour sélectionner le degré de surchauffe d'aspiration comme la cible de commande du premier détendeur (31) et pour employer le degré de surchauffe à la sortie de chacun du collecteur de chaleur perdue (12) et du super-refroidisseur (13) comme la cible de commande des détendeurs correspondants (32, 33) de sorte que l'évaporateur principal optimal est sélectionné en fonction de la température d'air extérieur ou charge de chauffage.

2. Module de commande électronique (10) selon la revendication 1, dans lequel, au cas où la température d'air extérieur est inférieure à une température prédéterminée, le module de commande électronique (10) est configuré pour sélectionner le degré de surchauffe d'aspiration comme la cible de commande du deuxième détendeur (32) et pour employer le degré de surchauffe à la sortie de chacun des deux autres des trois détendeurs (31, 33) comme la cible de commande des détendeurs correspondants (31, 33).

3. Module de commande électronique (10) selon la revendication 1, dans lequel, au cas où la charge de chauffage est inférieure à une charge prédéterminée, le module de commande électronique (10) est configuré pour sélectionner le degré de surchauffe d'aspiration comme la cible de commande du troisième détendeur (33) et pour employer le degré de surchauffe à la sortie de chacun des deux autres des trois détendeurs (31, 32) comme la cible de commande des détendeurs correspondants (31, 32).
